# EUROPEAN PATENT APPLICATION

(11) **EP 4 509 461 A1**
(43) Date of publication of application: **19.02.2025**
(21) Application number: 22740933.1
(22) Date of filing: 13.04.2022
(51) Int. Cl.: C01B 3/34, C10B 47/00, C10K 3/00, C10K 3/04

(54) **METHOD FOR WASTE MATERIAL RECOVERY BY PRODUCING HYDROGEN AND SYSTEM TO PERFORM IT**

(71) Applicant: IET Ecology S.L., 01013 Vitoria-Gasteiz, Alava (ES)
(72) Inventor: OBREGÓN BENGOA, Iker, 01013 Vitoria-Gasteiz, Alava (ES); RUIZ DE ANGULO GABILONDO, Juan, 01013 Vitoria-Gasteiz, Alava (ES); CAUBILLA ANGULO, Juan Manuel, 01013 Vitoria-Gasteiz, Alava (ES)
(74) Representative: Pons
(86) International application number: PCT/ES2022/070230
(87) International publication number: WO 2023/198939

(57) **Abstract**

The invention relates to a method for producing hydrogen from waste, using thermochemical treatments.

## Description

### OBJECT OF THE INVENTION

The present invention relates to a process for obtaining hydrogen from waste, by means of thermo-chemical treatments.

### BACKGROUND OF THE INVENTION

Currently there is great interest in obtaining hydrogen both for its numerous traditional industrial uses and for its growing use as a fuel that does not generate carbon dioxide emissions when used.

Hydrogen can be obtained in various ways, electrolysis of water, steam reforming or thermo-chemical transformation, among others. The thermo-chemical processes of hydrogen production involve chemical reactions at elevated temperatures in order to obtain hydrogen.

Another area of special interest today is the development of valorization methods for the growing amount of waste generated by human activity. For example, patent publication number EP3019274 describes a method for treating wastewater with formaldehyde to produce hydrogen in the presence of a catalyst.

In the present invention, a method for the production of hydrogen from waste has been developed, wherein said production is optimized through processes such as pyrolysis and cracking.

### DESCRIPTION OF THE INVENTION

Hydrogen is an essential chemical compound for industry and is postulated as an energy vector essential for the future, since the only product of its combustion is water vapor. For these reasons it is interesting to develop methods for obtaining hydrogen. In addition, in the process of the present invention, hydrogen is obtained from waste, which implies a material valorization that has a positive impact on the environment, by avoiding waste disposal in landfills or its incineration.

The present invention describes a method and a system, based on the thermo- chemical processing of waste, for the production of hydrogen.

The method of the invention comprises a pyrolysis reaction where the starting waste is decomposed by external heating of the reactor and under a reducing atmosphere. From the products obtained in the pyrolysis, the obtained solid phase can optionally be separated. After pyrolysis, the method comprises a step of cracking the pyrolysis products, in which they react in the presence of oxygen and steam to obtain a synthesis gas. At the outlet of the cracking step, the raw synthesis gas obtained is cooled and purified.

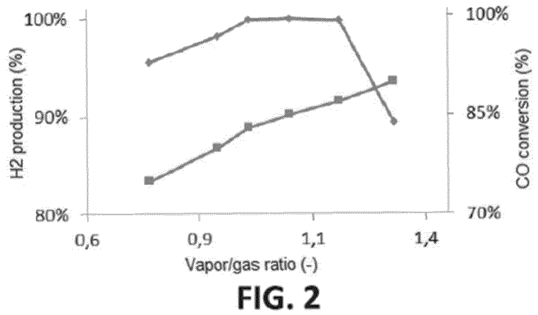

This gas is mixed with steam and it reacts, in the presence of a catalyst, to obtain a hydrogen-enriched synthesis gas. In this step, the carbon monoxide in the synthesis gas reacts with the water to form hydrogen, which will be purified in the next step, giving rise to the final product, purified hydrogen, and a tail gas that is used to supply the thermal energy required at different steps of the method. Contrary to what is expected in a method for the production of hydrogen, the integration of the method results in a point of maximum hydrogen production by mixing the steam with the purified synthesis gas in a molar ratio in the range between 0.90 and 1.20, which limits the conversion of carbon monoxide to hydrogen between 83% and 87%, as shown in Figure 2.

Therefore, the invention relates to the method for material valorization of waste by obtaining hydrogen, which comprises the steps of:
a) subjecting to pyrolysis the starting waste, by means of external heating and under a reducing atmosphere to obtain pyrolysis products;
b) optionally, separating the solid fraction from the pyrolysis products;
c) cracking the products obtained in step a) of pyrolysis, or in step b) after separating the solid fraction, in the presence of oxygen and a first steam stream, to obtain raw synthesis gas;
d) cooling the raw synthesis gas obtained in c);
e) purifying the raw synthesis gas obtained in d) to obtain purified synthesis gas;
f) mixing a second steam stream with the preheated gas stream obtained in e), in a molar ratio of between 0.90 and 1.20;
g) converting the mixture obtained in f), in the presence of a catalyst, to obtain a hydrogen-enriched synthesis gas;
h) separating the hydrogen-enriched synthesis gas, to obtain hydrogen and a tail gas from the separation of hydrogen.

The term "material valorization" relates to the use of a waste to obtain a material product that can be used in a socio-economic activity.

The term "waste" in the present description relates to a material, discarded from other processes, capable of undergoing chemical decomposition by heating to give rise to, at least, a combustible gas. Examples of this waste are, among others: solid urban waste, waste from industrial activities or biomass waste.

The term "pyrolysis" relates to thermolysis under a reducing atmosphere.

The term "external heating" relates to indirect heating, that is, supplying heat externally by electrical heating, external combustion or other means.

The term "cracking" in the present invention relate to the thermo-chemical conversion of tars into lower molecular weight molecules, optionally in the presence of a catalyst.

The term "tars" in the present invention relates to the organic compounds, with a molecular weight higher than that of methane, coming from the pyrolysis reactor.

The term "synthesis gas" relates to a gas comprising primarily hydrogen and carbon monoxide, and which may contain smaller amounts of carbon dioxide, methane, water, nitrogen and tars.

The invention also relates to a system for the production of hydrogen comprising, at least:
a pyrolysis unit,
a cracking unit,
a purification unit,
a synthesis gas conversion unit,
a hydrogen separation unit.

The cracking unit comprises a cracking reactor and a cooling unit for the raw synthesis gas obtained.

### DESCRIPTION OF THE DRAWINGS

To complement the description that is being made, and for a better understanding of the features of the invention, according to a preferred example of its practical embodiment, a set of drawings is attached as an integral part of said description, wherein, with an illustrative and non-limiting nature, the following has been represented:

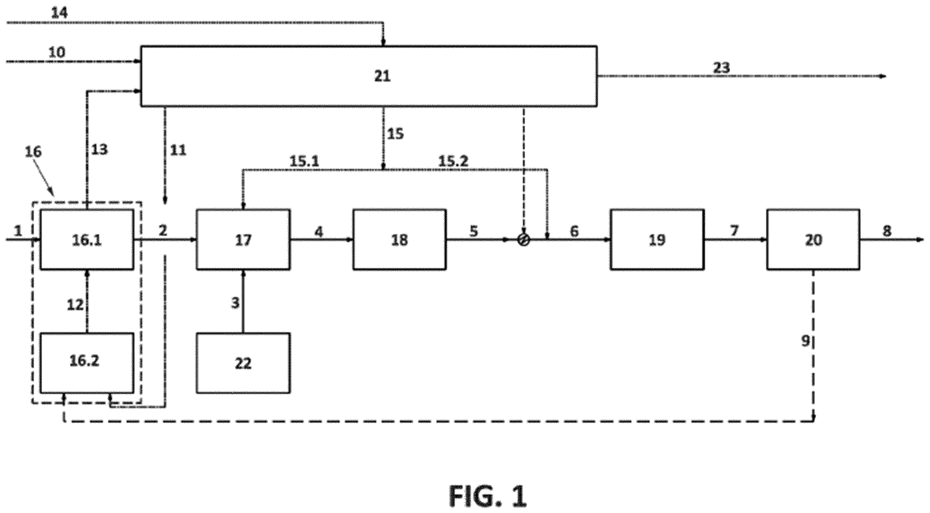

Figure 1 shows a diagram of an embodiment of the invention.
Figure 2 shows a graph that represents: on the horizontal axis the molar ratio between steam and gas in step f); on the left vertical axis, the percentage of obtained hydrogen compared to the maximum case; and, on the right vertical axis, the percentage of conversion of carbon monoxide obtained under said conditions.

### PREFERRED EMBODIMENT OF THE INVENTION

As indicated in the first aspect of the invention, it relates to a method for material valorization of waste by obtaining hydrogen, which comprises the steps of:
a) subjecting to pyrolysis the starting waste (1), by means of external heating and under a reducing atmosphere to obtain pyrolysis products (2);
b) optionally, separating the solid fraction from the pyrolysis products;
c) cracking the products obtained in the pyrolysis step a), or in step b) after separating the solid fraction, in the presence of oxygen (3) and a first steam stream (15.1), to obtain raw synthesis gas (4);
d) cooling the raw synthesis gas (4) obtained in c);
e) purifying the raw synthesis gas (4) obtained in d) to obtain purified synthesis gas (5);
f) mixing a second steam stream (15.2) with the preheated purified synthesis gas stream (5) obtained in e), in a molar ratio of between 0.90 and 1.20;
g) converting the mixture (6), obtained in f), in the presence of a catalyst, to obtain a hydrogen-enriched synthesis gas (7);
h) separating hydrogen-enriched synthesis gas (7), to obtain hydrogen (8) and a tail gas (9) from hydrogen separation.

Preferably, the ratio between the second steam stream (15.2) and that of the synthesis gas obtained in e) (5), in step f), is in a range from 0.96 to 1.16.

The present invention also relates to the method for the production of hydrogen in which the different streams are integrated to maximize hydrogen production. To improve the hydrogen production efficiency, the external heating of step a) is carried out by means of a step of combustion of a fraction of the tail gas from step h) (9), mixed with a preheated air stream (11), which generates a flue gas stream (12), which transfers heat in the external heating of step a) and, the flue gas stream after the pyrolysis step (13), transfers heat, at least, to a stream selected between: a stream of water (14) to generate steam (15) necessary for steps c) and f) and/or an air stream (10) to obtain the preheated air stream (11) and/or the stream of purified synthesis gas (5) processed in step f) and a heat transfer flue gas stream (23) is generated.

Therefore, preferably, the method comprises a step of combustion of a fraction of the tail gas (9) from step h), with a stream of preheated air (11), to generate a flue gas stream (12), which transfers heat in the external heating of step a) and, the flue gas stream after the pyrolysis step (13), gives off heat, at least to one stream selected from: a water stream (14) to generate steam (15) necessary for steps c) and f) and/or or to an air stream (10) to obtain the preheated air stream (11) and/or to the purified synthesis gas (5) in the preheating of step f).

In another embodiment of the invention, the pyrolyzer has sources for external heating that are not generated by streams from the method itself. In this embodiment, preferably, the method comprises a step of combustion of a fuel stream selected from a fraction of the tail gas (9) from step h) with a preheated air stream (11), which generates a flue gas stream (12), which gives off heat to at least one stream selected from: a water stream (14) to generate steam (15) necessary for steps c) and f) and/or an air stream (10) to obtain the preheated air stream (11) and/or the purified synthesis gas (5) in the preheating of step f).

An advantage of the present invention is the separation in steps of the thermo-chemical treatment of the waste, together with the optimization of the means to obtain the temperatures necessary for the different conversion reactions. In this way, a synthesis gas with minimal amounts of impurities and inert materials is obtained, in a system that minimizes thermal needs at high temperatures and, thus, results in high efficiencies.

Preferably, the pyrolysis step a) is carried out in a temperature range between 400°C and 650°C and the temperature of the cracking step c) is carried out at a temperature between 800°C and 1300°C to maximize the content of hydrogen and carbon monoxide in the synthesis gas, and minimize the content of tars.

Preferably, the cooling step d) is carried out using the heat of the raw synthesis gas (4) to generate steam. Preferably the temperature of the cooled raw synthesis gas is between 250°C and 350°C.

This raw synthesis gas (4) can have different contaminants, both solid and gaseous, and preferably, the purification requires one or more steps selected from: separation of solids, absorption in liquids and/or adsorption on solids.

Another advantage of the method is the recovery and use in the same method of the streams of water being condensed in the process. Thus, in a preferred embodiment, after conversion step g), the fraction of steam that has not reacted is condensed from the hydrogen-enriched gas (7), and a fraction of the condensed water is recycled together with the feed water (14).

In another preferred embodiment, after conversion step g), the hydrogen-enriched synthesis gas (7) is cooled by a stream of water that is subsequently heated to form steam (15.1) for the cracking step and/or the water vapor (15.2) for the conversion step.

Preferably, the starting waste (1) is selected from: solid urban waste, waste generated by commercial and industrial activity and/or biomass, among other possible ones.

Preferably, the starting waste (1) is treated before step a) to adapt it to the needs of the method. More preferably, the starting waste (1) is selected by size through a sieve and/or crushed and/or pressed and/or dried. In particular, the particle size of the starting waste shall be less than 10 mm in the largest of its dimensions.

Preferably, in step b) the solid fraction is separated from the pyrolysis products. This product can be used as fuel or can be used to recover metals present in this fraction.

The second aspect of the present invention relates to the systems to carry out the waste valorization method for the production of hydrogen, which consists of at least the following elements:
a pyrolysis unit (16),
a cracking unit (17),
a purification unit (18),
a synthesis gas conversion unit (19),
a hydrogen separation unit (20).

Preferably, the pyrolysis unit comprises a pyrolyzer (16.1) and at least one burner (16.2) to generate the heat necessary for pyrolysis.

In addition, preferably, the system for carrying out the method for the production of hydrogen comprises a section for recovering residual heat from the flue gas (21). More preferably, the section for recovering residual heat from the flue gas (21) comprises a burner.

Preferably the system comprises an oxygen production unit (22), which oxygen is used in the cracking unit (17).

### Example1.Exampleofhydrogenproductionfromwaste

The crushed urban solid waste was fed through a hopper, with a bulky material rejection mesh, from where it was dosed to the pyrolyzer, avoiding the entry of air into the reactor. In the pyrolyzer, waste was subjected to a temperature of 450°C under a reducing atmosphere for its partial decomposition. The pyrolysis products, then, entered the cracking reactor where they were thermally converted into synthesis gas at 1200°C, in the presence of steam and oxygen. The raw synthesis gas was cooled to 330°C. The cooled raw synthesis gas then passed to a purification unit to remove contaminants, consisting of an absorption unit and an adsorption unit. The purified synthesis gas was preheated in the unit for recovering residual heat from the flue gas and mixed with steam before being fed into the synthesis gas conversion reactor, wherein the CO reacts with steam to produce H2 and CO2 over a catalytic bed. The hydrogen-enriched synthesis gas was fed to a hydrogen separation unit by pressure swing adsorption (PSA) from which H2 and a tail gas stream, that was used to supply heat to the pyrolyzer, were obtained.

Different ratios of steam with respect to the purified synthesis gas were tested and the ratio that optimizes the hydrogen yield of the system was found, as shown in Figure 2. It was found that the best results are obtained with a ratio between 0.90 and 1.20.

## Claims

1. Method for the material valorization of waste by obtaining hydrogen, which includes the steps of:
a) subjecting to pyrolysis the starting waste (1), by means of external heating and under a reducing atmosphere to obtain pyrolysis products (2);
b) optionally, separating the solid fraction from the pyrolysis products;
c) cracking the products obtained in the pyrolysis step a), or in step b) after separating the solid fraction, in the presence of oxygen (3) and a first steam stream (15.1), to obtain raw synthesis gas (4);
d) cooling the raw synthesis gas (4) obtained in c);
e) purifying the raw synthesis gas (4) obtained in d) to obtain purified synthesis gas (5);
f) mixing a second steam stream (15.2) with the preheated purified synthesis gas stream (5) obtained in e), in a molar ratio of between 0.90 and 1.20;
g) converting the mixture (6), obtained in f), in the presence of a catalyst, to obtain a hydrogen-enriched synthesis gas (7);
h) separating hydrogen-enriched synthesis gas (7), to obtain hydrogen (8) and a tail gas (9) from hydrogen separation.

2. Method according to claim 1, **characterized in that** the ratio of step f) between the second stream of water vapor (15.2) and the first gas fraction (5.1) is in a range from 0.96 to 1.16.

3. Method according to claim 1 or 2, **characterized by** a combustion step of, at least, a fraction of the tail gas (9) from step h) with a preheated air stream (11), which generates a flue gas stream (12), which gives off heat, at least, to a stream selected from: a stream of water (14) to generate steam (15) necessary for steps c) and f) and/or to an air stream (10) to obtain the preheated air stream (11) and/or the purified synthesis gas (5) in the preheating of step f).

4. Method according to any one of claims 1 or 2, **characterized in that** it comprises a combustion step of at least a fraction of the tail gas (9) from step h) with a preheated air stream (11), which generates a flue gas stream (12), which gives off heat in the external heating of step a) and, after the pyrolysis step, the flue gas stream (13) leaving the pyrolyzer gives off heat, at least, to a stream selected from: a water stream (14) to generate steam (15) necessary for steps c) and f) and/or an air stream (10) to obtain the preheated air stream (11) and/or the purified synthesis gas (5) in the preheating of step f).

5. Method according to any one of claims 1 to 4 **characterized in that** the pyrolysis step a) is carried out in a temperature range between 400°C and 650°C and the temperature of the cracking step b) is in a range between 800°C and 1300°C.

6. Method according to any one of claims 1 to 5 **characterized in that** after conversion step g), the hydrogen-enriched synthesis gas (7) is cooled by a stream of water which is subsequently heated to form steam (15.1) for the cracking step and/or steam (15.2) for step f).

7. Method according to any one of claims 1 to 6 **characterized in that** after the conversion step g), the unreacted steam fraction of the hydrogen-enriched synthesis gas (7) is condensed, and the condensed water is recycled together with the feed water (14). nn

8. A system to carry out the method of claims 1 to 7 comprising, at least:
a pyrolysis unit (16),
a cracking unit (17),
a purification unit (18),
a synthesis gas conversion unit (19),
a hydrogen separation unit (20)

9. A system for carrying out the method of claims 1 to 7 according to claim 8, **characterized in that** it comprises a section for recovering residual heat from the flue gas (21).

10. A system to carry out the method of claims 1 to 7 according to claims 8 to 9 **characterized in that** it comprises an oxygen production unit (22).
